# EUROPEAN PATENT APPLICATION

(11) **EP 4 535 517 A1**
(43) Date of publication of application: **09.04.2025**
(21) Application number: 23815635.0
(22) Date of filing: 25.04.2023
(51) Int. Cl.: H01M 10/658, H01M 10/625

(54) **BUFFERING MATERIAL FOR BATTERIES**

(30) Priority: 03.06.2022 JP 2022090743
(71) Applicant: NOK Corporation, Tokyo 105-8585 (JP)
(72) Inventor: YAMASAKI Shunji, Tsujido-shinmachi, Fujisawa-shi, Kanagawa 251- 0042 (JP); OYAMA Takayuki, Tsujido-shinmachi, Fujisawa-shi, Kanagawa 251- 0042 (JP); XU Fangman, Tsujido-shinmachi, Fujisawa-shi, Kanagawa 251- 0042 (JP); KARUBE Shotaro, Tsujido-shinmachi, Fujisawa-shi, Kanagawa 251- 0042 (JP)
(74) Representative: TBK
(86) International application number: PCT/JP2023/016308
(87) International publication number: WO 2023/233874

(57) **Abstract**

There is provided a battery buffering member that has heat insulating performance by including heat insulating members, and the heat insulating performance is hardly deteriorated even when the buffering member is compressed under an external force in a thickness direction thereof.

A battery buffering member 100 comprising an elastic member 20 having protruding portions 22, and heat insulating members 30 that are plate-like structures having through-holes 31 formed thereon, wherein the heat insulating members 30 are disposed on one surface side and the other surface side of the elastic member 20, respectively, and the protruding portions 22 of the elastic member 20 protrude from the through-holes 31 of the heat insulating members 30.

## Description

### Technical Field

The present invention relates to a battery buffering member. More specifically, the present invention relates to a battery buffering member used in a battery such as a secondary battery used in an electric vehicle or the like.

### Description of the Related Art

Conventionally, a battery (secondary battery) is widely used as an energy source of an electric vehicle or the like. The battery includes a plurality of battery cells, a buffering member (a battery buffering member), and the like. As a configuration of the battery cell, there is known a configuration which has an electrode assembly that is formed by laminating a positive electrode, a negative electrode, and a separator, and accommodates the electrode assembly in a housing case thereof.

The battery may be a lithium ion battery. The battery includes a restraining portion that laminates a plurality of the housing cases (the battery cells) in which an electrode assembly constituting the battery is housed and restrains the housing cases in the laminating direction. The restraining portion is disposed outside of the housing cases to restrain the housing cases from the outside.

In such a battery, a plurality of housing cases (battery cells) are arranged so as to be restrained by the restraining portion, and expand or contract due to heat generated during charging and discharging.

In the battery, electrodes (electrode particles) may be crushed due to changes in the volume caused by the expansion and contraction associated with the charging and discharging, and in this case, the life of the battery tends to be shortened. In addition, when a specific battery cell inside the battery generates heat, which causes other battery cells to generate heat, the temperature of the battery will continue to rise, which may cause a thermal runaway of the battery or a fire.

For these reasons, it is important for the battery to suppress expansion and contraction of the battery cells during use and to insulate heat between the battery cells during thermal runaway. Therefore, a buffering member (battery buffering member) including an elastic body having thermal resistance and a heat insulating material for ensuring heat insulating property is disposed between adjacent battery cells (see, for example, Patent Document 1).

### Citation List

### Patent Document

[Patent Document 1] JP-A-2021-140968

### SUMMARY OF THE INVENTION

### Problem to be Solved by the Invention

However, in the case of a laminated structure (buffering member) in which the heat insulating part and the buffering part are laminated as shown in FIG. 1A of the heat insulating material for a battery of Patent Document 1, as the battery cell expands, the heat insulating part is also compressed by an external force in the thickness direction. When the heat insulating part is compressed by the external force as described above, the heat insulating performance of the heat insulating part may deteriorate.

In particular, the spacing between the cells constituting the battery (that is, the arrangement space of the battery buffering member) is very narrow, and when one cell generates heat, the heat is easily transmitted to the adjacent cell, so that it is desirable to prevent even the slightest deterioration in the heat insulating performance. Therefore, in the battery buffering member having heat insulating performance, it has been desired to develop a battery buffering member that does not easily deteriorate the heat insulating performance even when compressed under an external force in the thickness direction.

The present invention has been made in view of such a prior art, and an object of the present invention is to develop a battery buffering member that has heat insulating performance by including heat insulating members, and the heat insulating performance is hardly deteriorated even when the buffering member is compressed under an external force in the thickness direction.

### Means for Solving the Problems

According to the present invention, the following battery buffering member is provided.
[1] A battery buffering member comprising: an elastic member having protruding portions, and heat insulating members that are plate-like structures having through-holes formed thereon, wherein
   the heat insulating members are disposed on one surface side and the other surface side of the elastic member, respectively, and the protruding portions of the elastic member protrude from the through-holes of the heat insulating members.
[2] The battery buffering member according to [1], wherein a gap that enables compressive deformation of the elastic member is formed between the elastic member and the heat insulating member.
[3] The battery buffering member according to [2], wherein the protruding portion of the elastic member has a protruding shape that tapers toward an apex.
[4] The battery buffering member according to [3], wherein the elastic member has a corrugated shape with repeated unevenness in a cross section in the thickness direction.
[5] The battery buffering member according to [2], wherein the protruding portion of the elastic member is pillar-shaped.
[6] A battery buffering member comprising: an elastic member disposed between two articles in which at least one of the articles expands and contracts and compressed and deformed under an external force caused by the expansion of the article that expands and contracts; and
   a heat insulating member that does not receive an external force from the article and is not compressed and deformed, even when the elastic member is compressed and deformed.
[7] The battery buffering member according to [3], [5], or [6], wherein the elastic member and the heat insulating member are separate bodies.

The battery buffering member of the present invention is a battery buffering member having heat insulating performance by including a heat insulating member, and has an effect that the heat insulating performance is hardly deteriorated even when the buffering member is compressed under an external force in the thickness direction.

### BRIEF DESCRIPTION OF THE DRAWINGS

FIG. 1 is a perspective view schematically showing an embodiment of a battery buffering member according to the present invention.
FIG. 2 is a plan view schematically showing an embodiment of a battery buffering member according to the present invention.
FIG. 3 is a cross-sectional view schematically showing a cross section taken along A to A of the battery buffering member shown in FIG. 2.
FIG. 4A is a perspective view schematically showing an embodiment of a protruding portion in a battery buffering member of the present invention.
FIG. 4B is a perspective view schematically showing another embodiment of the protruding portion in a battery buffering member of the present invention.
FIG. 4C is a perspective view schematically showing still another embodiment of the protruding portion in a battery buffering member of the present invention.
FIG. 4D is a perspective view schematically showing still another embodiment of the protruding portion in a battery buffering member of the present invention.
FIG. 4E is a perspective view schematically showing still another embodiment of the protruding portion in a battery buffering member of the present invention.
FIG. 4F is a perspective view schematically showing still another embodiment of the protruding portion in a battery buffering member of the present invention.
FIG. 4G is a perspective view schematically showing still another embodiment of the protruding portion in a battery buffering member of the present invention.
FIG. 5 is a plan view schematically showing another embodiment of a battery buffering member of the present invention.
FIG. 6 is a plan view schematically showing still another embodiment of a battery buffering member of the present invention.
FIG. 7 is a cross-sectional view schematically showing a cross section taken along B to B of the battery buffering member shown in FIG. 6.
FIG. 8 is an explanatory view schematically showing a state at the time of compressive deformation in the battery buffering member shown in FIG. 7.
FIG. 9 is a plan view schematically showing still another embodiment of a battery buffering member of the present invention.
FIG. 10 is a cross-sectional view schematically showing a cross section taken along C to C of the battery buffering member shown in FIG. 9.
FIG. 11 is a perspective view schematically showing still another embodiment of a battery buffering member of the present invention.
FIG. 12 is a cross-sectional view schematically showing a cross section of the battery buffering member shown in FIG. 11 in the thickness direction.
FIG. 13 is a cross-sectional view of still another embodiment of a battery buffering member of the present invention corresponding to FIG. 12.
FIG. 14 is a plan view schematically showing still another embodiment of a battery buffering member of the present invention.
FIG. 15 is a cross-sectional view schematically showing a cross section taken along D to D of the battery buffering member shown in FIG. 14.
FIG. 16 is an explanatory view schematically showing a state at the time of compressive deformation in the battery buffering member shown in FIG. 15.
FIG. 17 is a cross-sectional view schematically showing a use state of an embodiment of a battery buffering member of the present invention.
FIG. 18 is a cross-sectional view schematically showing another use state of an embodiment of a battery buffering member of the present invention.
FIG. 19 is a perspective view schematically showing a conventional battery buffering member.
FIG. 20 is an explanatory view schematically showing a state in which a conventional battery buffering member receives an external pressure.

### Mode for Carrying out the Invention

Hereinafter, embodiment of the present invention will be described referring to the drawings. It should be understood that the present invention is not limited to the following embodiments, and modifications, improvements, and the like can be made as appropriate based on ordinary knowledge of a person skilled in the art without departing from the spirit of the present invention.

### (1) Battery buffering member:

The battery buffering member of the present invention includes an elastic member disposed between two articles in which at least one of the articles expands and contracts and compressed and deformed under an external force caused by the expansion of the article that expands and contracts, and a heat insulating member that does not receive an external force from the article and is not compressed and deformed even when the elastic member is compressed and deformed.

Such a battery buffering member is a battery buffering member having heat insulating performance by including a heat insulating member, and the heat insulating performance is hardly deteriorated even when the buffering member is compressed under an external force in a thickness direction thereof.

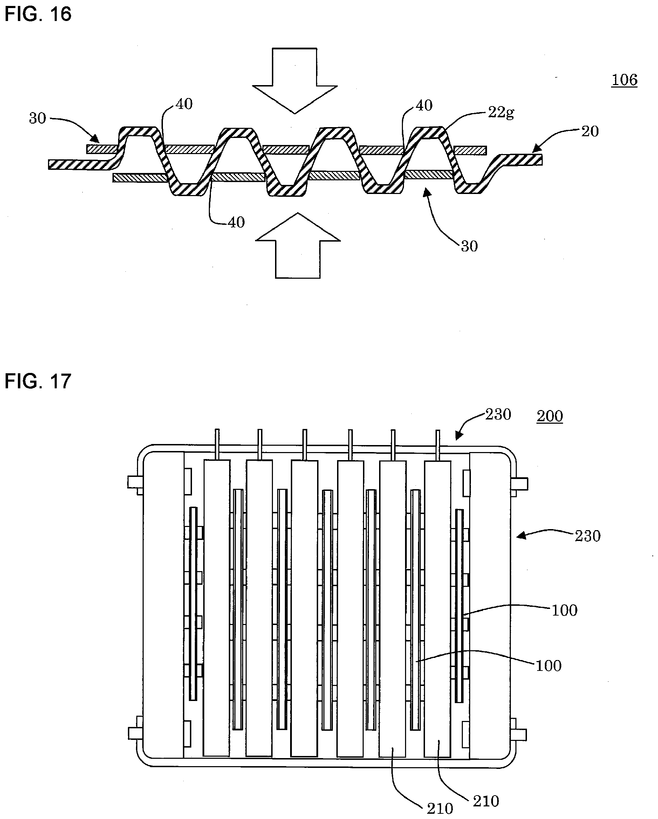

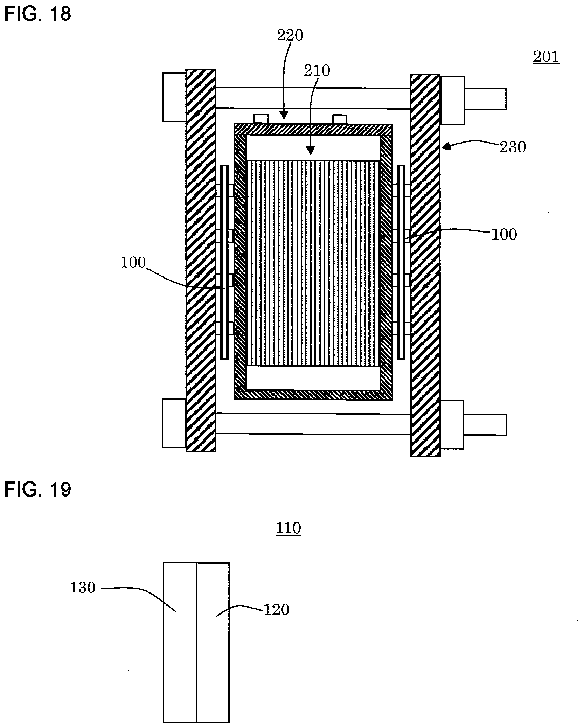

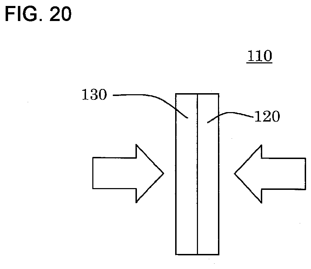

FIG. 19 shows a conventional battery buffering member 110. The conventional battery buffering member 110 has a configuration in which an elastic member 120 and a heat insulating member 130 are laminated, and is compressed in the thickness direction as shown in FIG. 20 when the battery cell 210 (see FIG. 17) expands, for example. In the battery buffering member 110, there is a concern that the heat insulating performance of the heat insulating member 130 deteriorates when the heat insulating member 130 is compressed. In particular, a space between battery cells constituting the battery (i.e., an arrangement space of the battery buffering member) is very narrow, and when one battery cell generates heat, the heat is easily transferred to the adjacent battery cell. Therefore, in the battery (battery cell), it is important to prevent a slight deterioration in the heat insulating performance.

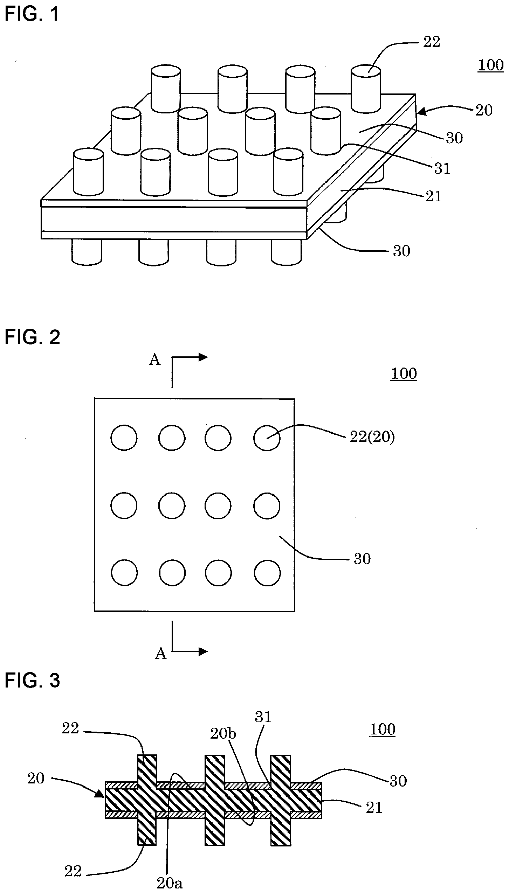

FIG. 1 to FIG. 3 show a battery buffering member 100, which is an embodiment of the battery buffering member of the present invention. The battery buffering member 100 includes an elastic member 20 disposed between two articles in which at least one of the articles expands and contracts, such as battery cells 210 and 210 (see FIG. 17), and compressed and deformed under an external force caused by the expansion of the article that expands and contracts, and a heat insulating member 30 that does not receive an external force from the battery cells 210 and 210 and is not compressed and deformed even when the elastic member 20 is compressed and deformed. The battery buffering member 100 has an elastic member 20 having protruding portions 22 (a plate-like structure). Further, the heat insulating members 30 are plate-like structures having through-holes 31 formed thereon, and the heat insulating member 30 is disposed on one surface 20a side and the other surface 20b side of the elastic member 20, respectively, and the protruding portions 22 of the elastic member 20 protrude from the through-holes 31 of the heat insulating members 30.

The material of the elastic member 20 is not particularly limited, and examples thereof include rubbers, foamed bodies, and resin-based elastomers.

By having protruding portions 22 of the elastic member 20, the contact area between the battery buffering member and an article such as a battery cell is reduced, and the amount of heat transferred from the contact surface with the article can be reduced. Further, when the protruding portion 22 supports a compressive load caused by the expansion of the article, it is possible to prevent the load from being directly applied to the heat insulating member, and consequently, the heat insulating member can be effectively prevented from being compressed.

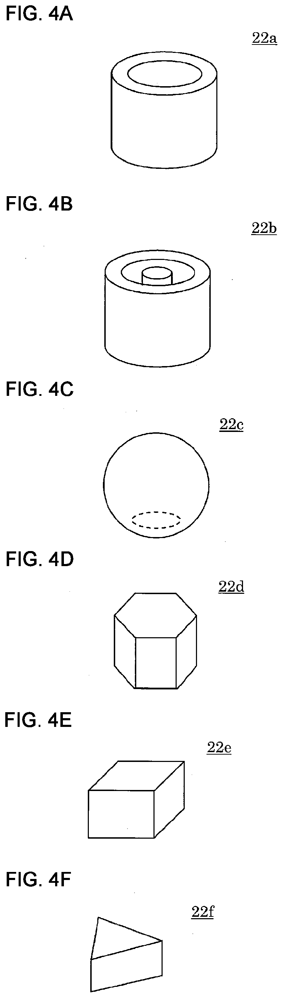

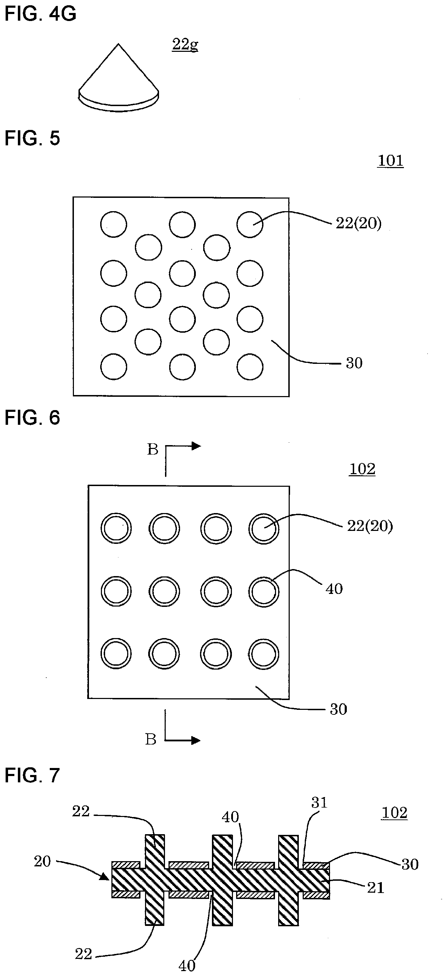

The shape of the protruding portion 22 is not particularly limited, and may be columnar (specifically, cylindrical) as in the protruding portions 22 of the elastic member 20 of the battery buffering member 100 shown in FIG. 1, and examples thereof include a cylinder, a middle shaft, a spherical shape, a hexagonal pillar shape, a square pillar shape, a triangular prism shape, or a conical shape. FIG. 4A shows a protruding portion 22a of a cylinder, FIG. 4B shows a protruding portion 22b of a middle shaft, FIG. 4C shows a protruding portion 22c of a spherical shape, FIG. 4D shows a protruding portion 22d of a hexagonal pillar shape, FIG. 4E shows a protruding portion 22e of a square pillar shape, FIG. 4F shows a protruding portion 22f of a triangular prism shape, and FIG. 4G shows a protruding portion 22g of a conical shape.

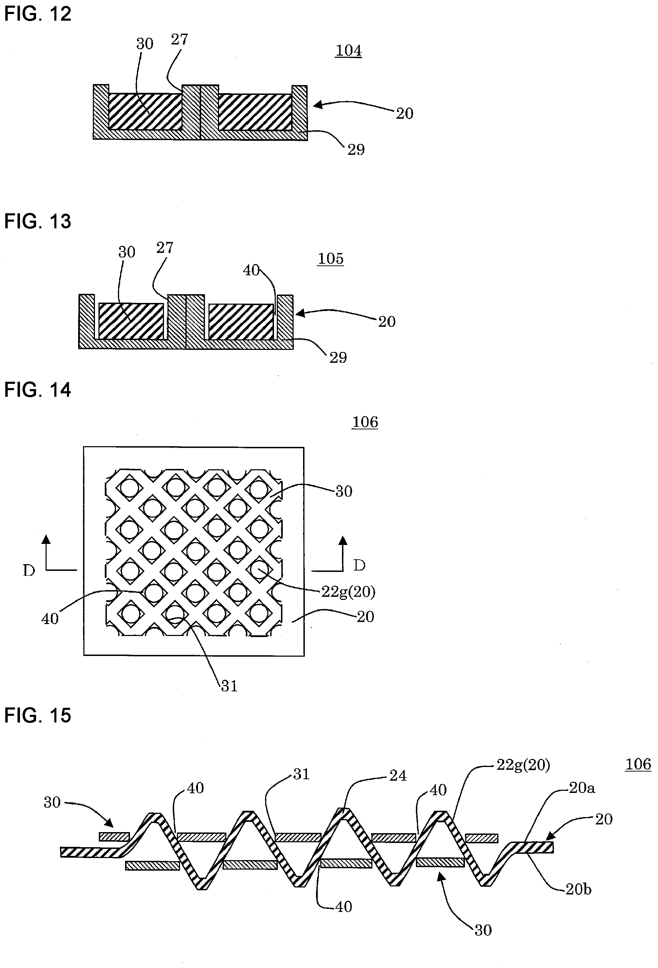

As shown in FIG. 15, the protruding portions 22g of a conical shape may have a protruding shape that tapers toward an apex 24. In this way, an air layer is formed between the elastic member 20 and an article such as a battery cell, and this air layer further improves the thermal insulation.

The number and the arrangement state of the protruding portions 22 of the elastic member 20 are not particularly limited, and for example, the same number (four in FIG. 2) of protruding parts 22 may be arranged in a plurality of rows (three rows in FIG. 2) in parallel as shown in FIG. 2, or may be arranged as the battery buffering member 101 shown in FIG. 5. In the battery buffering member 101 shown in FIG. 5, protruding parts 22 are further arranged between adjacent rows with being shifted.

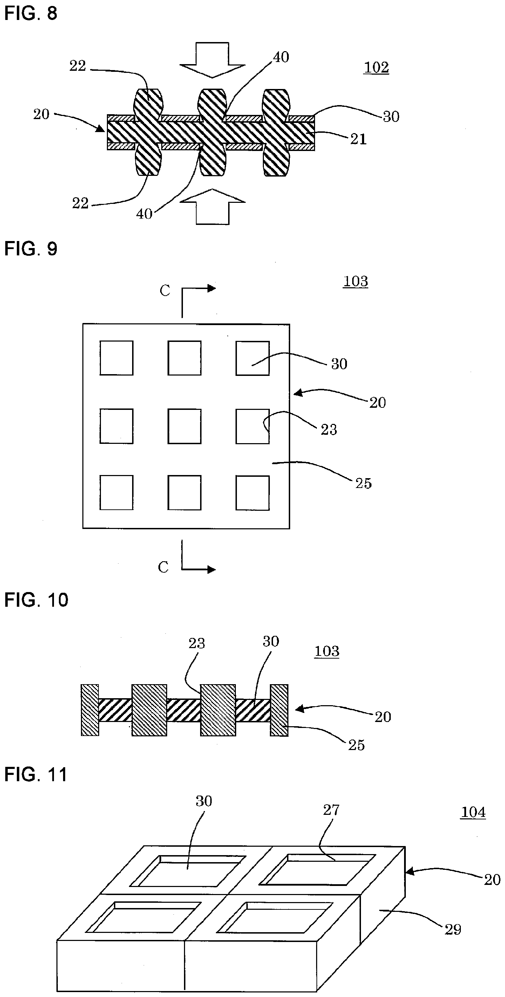

The shape of the elastic member 20 is not particularly limited, and for example, the elastic member may have a planar part 21 and protruding portions 22 protruding from the planar part 21 as shown in FIG. 3. In addition, as in the battery buffering member 103 shown in FIGs. 9 and 10, the elastic member may have a plate-like part 25 on which an elastic through-hole 23 is formed. Further, as in the battery buffering member 104 shown in FIGs. 11 to 13, the elastic member may have a plate-like part 29 on which an elastic recess 27 is formed.

Furthermore, as in the battery buffering member 106 shown in FIGs. 14 and 15, the elastic member 20 may be a corrugated shape (a corrugated plate shape) with repeated unevenness in a cross section in the thickness direction.

Next, as described above, the heat insulating member 30 does not receive an external force from the above-described articles such as the battery cells 210 and 210 (see FIG. 17) and is not compressed and deformed, even when the elastic member 20 is compressed and deformed.

As the heat insulating member 30, a conventionally known heat insulating material having heat insulating performance can be used as appropriate, and examples of the material include a fibrous material (glass wool, rock wool, and the like) and a porous material (silica aerogel, and the like). When a heat insulating member made of such a material is compressed, its heat insulating performance tends to deteriorate.

The shape of the heat insulating member 30 is not particularly limited, but may be a plate shape in which through-holes 31 are formed, such as the battery buffering members 100 and 106 shown in FIGs. 1 to 3, 14, and 15. In addition, as in the battery buffering member 103 shown in FIG. 9, it may be a plate shape disposed in the elastic through-hole 23. In addition, as in the battery buffering members 104 and 105 shown in FIGs. 12 and 13, it may be a plate shape disposed in the elastic recess 27 of the plate-like part 29.

Next, in the battery buffering member of the present invention, it is preferable that a gap that enables compressive deformation of the elastic member, that is, a gap that prevents the elastic member (in particular, protruding portions of the elastic member) and the heat insulating member from contacting each other and interfering with each other when the elastic member is compressed and deformed, is formed between the elastic member (in particular, the protruding portions of the elastic member) and the heat insulating member. Since the gap is formed in this manner, a load applied to the heat insulating member 30 can be further avoided when the battery cell or the like expand.

FIGs. 6 to 8 show a battery buffering member 102 in which a gap 40 that enables compressive deformation of the elastic member 20 is formed between the elastic member 20 and the heat insulating member 30. In the battery buffering member 102, a gap 40 is formed between the heat insulating member 30 and the protruding portion 22 of the elastic member 20, and when the battery buffering member 100 is compressed as shown in FIG. 8, the protruding portion 22 of the elastic member 20 in particular is deformed to collapse. At this time, since the gap 40 is formed, it is possible to prevent the heat insulating member 30 from being pressurized by the elastic member 20 (in particular, the protruding portions 22 thereof) even when the battery buffering member 100 is compressed. That is, a space is provided between the heat insulating member 30 and elastic member 20 by the deformation amount of the elastic member 20 (the protruding portions 22), and the elastic member 20 is less likely to interfere with the heat insulating member 30 even when the elastic member 20 is deformed.

In addition, FIG. 13 shows a battery buffering member 105 in which a gap 40 that enables compressive deformation of the elastic member 20 is formed between the elastic member 20 and the heat insulating member 30. In the battery buffering member 105, a gap 40 is formed between the heat insulating member 30 and the protruding portion 22 of the elastic member 20. Since the gap 40 is formed, it is possible to prevent the heat insulating member 30 from being pressurized by the elastic member 20 even when the battery buffering member 105 is compressed.

Further, FIGs. 14 to 16 show a battery buffering member 106 in which a gap 40 that enables compressive deformation of the elastic member 20 is formed between the elastic member 20 and the heat insulating member 30. In the battery buffering member 106, a gap 40 is formed between the heat insulating member 30 and the protruding portions 22g of the elastic member 20, and when the battery buffering member 106 is compressed as shown in FIG. 16, the protruding portions 22g of the elastic member 20 in particular is deformed to collapse. At this time, since the gap 40 is formed, it is possible to prevent the heat insulating member 30 from being pressurized by the elastic member 20 (in particular, the protruding portions 22g thereof) even when the battery buffering member 106 is compressed. That is, a space is provided between the heat insulating member 30 and the elastic member 20 by the deformation amount of the elastic member 20 (the protruding portions 22g), and the elastic member 20 is less likely to interfere with the heat insulating member 30 even when the elastic member 20 is deformed.

As yet another embodiment of the battery buffering member of the present invention, a battery buffering member 106 shown in FIGs. 14 and 15 can be shown. The battery buffering member 106 has an elastic member 20 having protruding portions 22g. Further, the heat insulating member 30 is plate-like structure having through-holes 31 formed thereon, the heat insulating member 30 is disposed on one surface 20a side and the other surface 20b side of the elastic member 20, respectively, and the protruding portions 22g of the elastic member 20 protrude from the through-holes 31 of the heat insulating member 30. The elastic member 20 has a corrugated shape with repeated unevenness in a cross section in the thickness direction.

In the battery buffering member of the present invention, the elastic member and the heat insulating members are preferably separate bodies. When the elastic member and the heat insulating members are separated bodies, the elastic member 20 is even less likely to interfere with the heat insulating members 30 even when the elastic member 20 is deformed.

### (2) Use of Battery buffering member of present invention:

The battery buffering member of the present invention may be disposed between two articles in which at least one of the articles expands and contracts, and examples of the article may include a battery cell 210 as shown in FIG. 17, and the battery buffering member may be disposed between adjacent battery cells 210 as in a battery 200 shown in FIG. 17. In addition, the battery buffering member may be disposed between a laminated body including the plurality of battery cells 210 and a restraining portion 230 as in a battery 201 shown in FIG. 18.

The battery buffering member of the present invention is not limited to one, and a plurality of the buffering members may be used. In this case, a plurality of the battery buffering members may be laminated to use, or may be disposed on a flat surface to use, or a combination thereof may be used. The battery is not limited to an all-solid-state battery, and may be a liquid electrolyte battery.

With this disposition, the battery buffering member of the present invention absorbs expansion force generated when the battery cell (battery) expands, or functions as a buffering member when the battery receives an impact from an external force.

### Industrial applicability

The battery buffering member of the present invention can be employed as a battery buffering member such as a lithium battery used in an electric vehicle or the like.

### Description of Reference numerals

20: elastic member
20a: one surface
20b: the other surface
21: planar part
22, 22a, 22b, 22c, 22d, 22e, 22f, 22g: protruding part
23: elastic through-hole
24: apex
25: plate-like part
27: elastic recess
29: plate-like part
30: heat insulating member
31: through-hole
40: gap
100, 101, 102, 103, 104, 105, 106, 110: battery buffering member
200, 201: battery
210: battery cell
230: restraining portion

## Claims

1. A battery buffering member comprising:
an elastic member having protruding portions, and
heat insulating members that are plate-like structures having through-holes formed thereon, wherein
the heat insulating members are disposed on one surface side and the other surface side of the elastic member, respectively, and the protruding portions of the elastic member protrude from the through-holes of the heat insulating members.

2. The battery buffering member according to claim 1, wherein a gap that enables compressive deformation of the elastic member is formed between the elastic member and the heat insulating member.

3. The battery buffering member according to claim 2, wherein the protruding portions of the elastic member has a protruding shape that tapers toward an apex.

4. The battery buffering member according to claim 3, wherein the elastic member has a corrugated shape with repeated unevenness in a cross section in the thickness direction.

5. The battery buffering member according to claim 2, wherein the protruding portions of the elastic member is pillar-shaped.

6. A battery buffering member comprising:
an elastic member disposed between two articles in which at least one of the articles expands and contracts and compressed and deformed under an external force caused by the expansion of the article that expands and contracts; and
heat insulating members that do not receive an external force from the article and are not compressed and deformed, even when the elastic member is compressed and deformed.

7. The battery buffering member according to claim 3, 5, or 6, wherein the elastic member and the heat insulating members are separate bodies.
